# EUROPÄISCHE PATENTANMELDUNG

(11) **EP 2 527 186 A2**
(43) Veröffentlichungstag der Anmeldung: **28.11.2012**
(21) Anmeldenummer: 12160272.6
(22) Anmeldetag: 20.03.2012
(51) Int. Cl.: B60L 11/18

(54) **Elektrisches Ladesystem**

(30) Priorität: 27.05.2011 DE 102011076601
(71) Anmelder: ZF Friedrichshafen AG, 88038 Friedrichshafen (DE)
(72) Erfinder: Januschewski, Robert, 88069 Tettnang (DE); Kett, Jürgen, 88045 Friedrichshafen (DE)

(57) **Zusammenfassung**

Elektrisches Ladesystem (1) für ein Kraftfahrzeug, wobei das Ladesystem (1) einen Gleichrichter (6) aufweist, welchem Energie aus einem externen Versorgungsnetz an einen Eingang (6a) zuführbar ist, wobei das Ladesystem (1) weiterhin einen Wechselrichter (3) aufweist, dessen Wechselspannungsseite (3b) über Strangleitungen (u, v, w) mit Wicklungssträngen (U, V, W) einer Drehfeldmaschine (4) elektrisch verbunden ist, und dessen Gleichspannungsseite (3a) mit einem zu ladenden Energiespeicher (2) elektrisch verbindbar ist, wobei ein erster Strompfadabschnitt (7a) zur Führung vom Gleichrichter (6) versorgten Stroms im Ladesystem (1) über den Pluspol des Gleichrichters (6) sowie die Drehfeldmaschine (4) zum Wechselrichter (3) gebildet ist, wobei der erste Strompfadabschnitt (7a) den Strom zwingend über Wicklungsstränge (U, V, W) der Drehfeldmaschine (4) führt, wobei der erste Strompfadabschnitt (7a) einen ersten Schalter (S1) aufweist, insbesondere einen steuerbaren Schalter (S1), mittels welchem der erste Strompfadabschnitt (7a) selektiv unterbrechbar ist, wobei das Ladesystem (1) dazu ausgebildet ist, mittels des ersten Schalters (S1) sowie wenigstens einem Wicklungsstrang (U, V, W) im ersten Strompfadabschnitt (7a) als Hochsetzsteller und auch als Tiefsetzsteller in Richtung zu einem Energiespeicher (2) wirken zu können.

## Beschreibung

Die vorliegende Erfindung betrifft ein elektrisches Ladesystem gemäß dem Oberbegriff von Anspruch 1.

Eine gattungsgemäße Einrichtung zum Laden eines Akkumulators mittels der bordeigenen Elektro-Antriebs-Infrastruktur eines Kraftfahrzeugs über einen Gleichrichter ist aus der Druckschrift EP 0 834 977 A2 bekannt, wobei mittels der Stranginduktivitäten der in Stern geschalteten Elektromaschine bei vorteilhaft geringem Aufwand ein Hochsetzsteller gebildet ist.

Nachteilig bei dieser bekannten Anordnung ist jedoch, dass weitergehende Lademöglichkeiten für einen Energiespeicher eines Kraftfahrzeugs durch die vorgeschlagene Einrichtung nicht zur Verfügung gestellt werden.

Ausgehend hiervon ist es Aufgabe der vorliegenden Erfindung, ein Ladesystem für ein Kraftfahrzeug vorzuschlagen, welches mittels der bordeigenen Elektro-Antriebsstruktur weitergehende Lademöglichkeiten bei geringem baulichen und finanziellen Aufwand ermöglicht.

Diese Aufgabe wird erfindungsgemäß durch die Merkmale des Anspruchs 1 gelöst. Vorteilhafte Ausführungsformen und Weiterbildungen sind Gegenstand der Unteransprüche.

Vorgeschlagen wird erfindungsgemäß ein elektrisches Ladesystem für ein Kraftfahrzeug, insbesondere ein Kraftfahrzeug mit einer elektrischen Antriebsstruktur, z.B. ein hybridisiertes Kraftfahrzeug mit einer elektrischen Antriebsmaschine oder z.B. ein Elektrofahrzeug.

Das Ladesystem weist einen Gleichrichter auf, welchem Energie aus einem externen Versorgungsnetz an einen Eingang zuführbar ist. Ein externes Versorgungsnetz kann z.B. ein 230V-Wechselspannungsnetz oder z.B. ein 400V-Drehstromnetz sein.

Bevorzugt ist der Gleichrichter ein Brückengleichrichter, insbesondere ein Gleichrichter, welcher als einphasige oder dreiphasige Vollbrücke wirken kann. Ein solcher, mittels Dioden bildbarer Gleichrichter kann vorteilhaft sowohl Wechsel- als auch Drehstromspannung gleichrichten bzw. aus entsprechenden Netzen gespeist werden, und an einem Ausgang je Gleichspannung bzw. gleichgerichteten Strom zur Verfügung stellen.

Bevorzugt ist das Ladesystem hierbei derart ausgebildet, dass ein Versorgungseingang desselben sowohl zur Verbindung mit einem Wechsel- als auch einem Drehstromnetz ausgebildet ist, so dass dem Gleichrichter über den Versorgungseingang je entsprechend Energie zuführbar ist. Auf vorteilhafte Weise kann der Versorgungseingang zwischen verschiedenen Anschlussvorrichtungen umschaltbar gebildet sein, z.B. zwischen einer Drehstrom- und einer Wechselstromsteckdose. Alternativ kann der Versorgungseingang z.B. nur zur Verbindung mit einem Drehstromnetz oder nur Verbindung mit einem externen Wechselspannungsnetz ausgelegt sein.

Das elektrische Ladesystem weist weiterhin einen Wechselrichter auf, welcher insbesondere als Antriebswechselrichter in einem Kraftfahrzeug vorgesehen ist. Der Wechselrichter weist bevorzugt eine B6-Brückenschaltung auf, in deren Halbbrücken je zwei Leistungsschalter samt zugehöriger Freilaufdioden angeordnet sind. Die derart gebildete Leistungsstufe, welche eine Wechselspannungsseite des Wechselrichters bildet, kann über eine Treiberschaltung angesteuert werden.

An einer Gleichspannungsseite des Wechselrichters weist der Wechselrichter insbesondere einen Zwischenkreiskondensator auf. Gleichspannungsseitig ist der Wechselrichter zur Verbindung mit einem Energiespeicher vorgesehen, insbesondere über den Zwischenkreiskondensator, welcher von dem Ladesystem zu laden ist. Ein solcher Energiespeicher kann ein Akkumulator, ein Super-Cap, eine Hochleistungsbatterie oder ein weiterer Energiespeicher je insbesondere eines elektrischen Antriebsstrangs eines Kraftfahrzeugs sein, vorzugsweise eine Traktionsbatterie.

Wechselspannungsseitig ist der Wechselrichter über Verbindungs- bzw. Strangleitungen mit Wicklungssträngen einer Drehfeldmaschine des Ladesystems elektrisch verbunden, bevorzugt über je einen Mittenabgriff der Halbbrücken. Die Drehfeldmaschine ist hierbei insbesondere eine elektrische Antriebsmaschine, z.B. eine Asychronmaschine oder eine Synchronmaschine, insbesondere eines Kraftfahrzeugs. Für den Ladebetrieb mittels des Ladesystems ist die Drehfeldmaschine jeweils im Stillstand.

Das Ladesystem ist erfindungsgemäß vorteilhaft dazu ausgebildet, als Hochsetzsteller und als Tiefsetzsteller in Richtung zu einem Energiespeicher wirken zu können. Hierzu ist im Ladesystem ein erster Strompfadabschnitt als Teil eines vom ausgangsseitigen Pluspol zum ausgangsseitigen Minuspol des Gleichrichters führenden Strompfads gebildet, welcher den vom Gleichrichter versorgten bzw. gelieferten Strom für einen Ladebetrieb des Ladesystems über den ausgangsseitigen Pluspol des Gleichrichters sowie die Drehfeldmaschine zum Wechselrichter führt. Der erste Strompfadabschnitt ist hierbei derart ausgebildet, dass der Strom entlang des ersten Strompfadabschnitts über Wicklungsstränge der Drehfeldmaschine gezwungen wird.

Im Rahmen der vorliegenden Erfindung weist der erste Strompfadabschnitt hierbei einen ersten Schalter auf, insbesondere einen steuerbaren Schalter, mittels welchem der erste Strompfadabschnitt selektiv unterbrechbar ist, d.h. elektrisch. Vorgesehen ist hierbei, den ersten Strompfadabschnitt über die Schaltstrecke des ersten Schalters zu führen. Ein solcher erster Schalter ist bevorzugt ein steuerbarer Leistungsschalter, z.B. ein transistorisierter Schalter, z.B. ein IGBT oder ein MOSFET. Der erste Schalter kann bevorzugt Bestandteil des Gleichrichters sein, wobei die Diodenbrücke mit Thyristor oder IGBT ausgeführt sein kann. Alternativ kann der erste Schalter z.B. separat gebildet sein oder z.B. ein mechanischer Schalter sein.

Vorgesehen ist hierbei insbesondere, dass der erste Strompfadabschnitt in Richtung vom Gleichrichter zur Drehfeldmaschine vor der Drehfeldmaschine mittels des ersten Schalters selektiv unterbrechbar ist, der erste Schalter insbesondere getaktet betreibbar ist.

Im Rahmen des vorgeschlagenen Ladesystems kann die Drehfeldmaschine sowohl im Stern als auch im Dreieck verschaltet sein. Bei Sternverschaltung der Drehfeldmaschine ist vorgesehen, einen ersten Teil des ersten Strompfadabschnitts über den ersten Schalter an einen Sternpunkt der Drehfeldmaschine zu führen. Der gleichgerichtete Strom für den Ladebetrieb wird somit durch die Strangwicklungen der Drehfeldmaschine gezwungen, so dass deren Strangwicklungsinduktivitäten für einen Hoch- oder Tiefsetzstellerbetrieb vorteilhaft genutzt werden können.

Für eine Dreieck- und auch eine Stern-verschaltete Drehfeldmaschine wird im Rahmen der vorliegenden Erfindung weiterhin vorgeschlagen, einen ersten Teil des ersten Strompfadabschnitts des Ladesystems über den ersten Schalter zur Drehfeldmaschine zu führen, wobei ein zweiter Schalter in einer Strangleitung von der Drehfeldmaschine zum Wechselrichter angeordnet ist. Der zweite Schalter ist hierbei dazu vorgesehen, diese Strangleitung selektiv zu unterbrechen, um den Strom entlang des ersten Strompfadabschnitts durch Strangwicklungen der Drehfeldmaschine zum Wechselrichter zu zwingen. Der zweite Schalter verhindert hierbei, dass der gleichgerichtete Strom bereits an einem Verbindungs- bzw. Einspeisepunkt des ersten Strompfadabschnitts mit der bzw. in die Drehfeldmaschine, an oder benachbart zu welchem insbesondere auch die mittels des zweiten Schalters zu unterbrechende Strangleitung abzweigt, in die Strangleitung fließt, ohne durch die Drehfeldmaschine bzw. deren Wicklungsstränge gezwungen zu werden.

Hierbei führt ein zweiter Teil des ersten Strompfadabschnitts durch wenigstens einen Wicklungsstrang der Drehfeldmaschine sowie wenigstens eine Strangleitung, insbesondere zwei Strangleitungen, zum Wechselrichter. Ein zweiter Strompfadabschnitt des Strompfads ist weiterhin durch den Wechselrichter und den Energiespeicher zum Minuspol des Gleichrichters bildbar bzw. gebildet.

Der zweite Schalter ist bevorzugt ebenfalls ein steuerbarer Leistungsschalter, z.B. ein transistorisierter Schalter, z.B. ein IGBT oder ein MOSFET. Alternativ kann der erste Schalter z.B. separat gebildet sein oder z.B. ein mechanischer Schalter sein.

Für insbesondere den Tiefsetzstellerbetrieb weist das Ladesystem eine Diode auf, welche ein Entladen des Tiefsetzstellers korrespondierend mit einem Abbau der in den Wicklungssträngen der Drehfeldmaschine gespeicherten Energie ermöglicht. Die Diode ist - in Richtung vom ausgangsseitigen Pluspol zum Minuspol des Gleichrichters betrachtet - stromaufwärts der Drehfeldmaschine über den ersten Schalter, i.e. stromabwärts desselben, im ersten Strompfadabschnitt mit dem Pluspol des Gleichrichters und andererseits mit dem Minuspol des Gleichrichters elektrisch verbunden. Die Sperrrichtung der Diode weist hierbei vom Pluspol zum Minuspol des Gleichrichters.

Im Rahmen der vorliegenden Erfindung ist das Ladesystem dazu ausgebildet, mittels des ersten oder des ersten und des zweiten Schalters, der Diode, sowie wenigstens einem Wicklungsstrang und dem Wechselrichter, insbesondere dessen Zwischenkreiskondensator, einen Tiefsetzsteller zu bilden. Hierbei wird der erste Schalter gemäß des Tiefsetzstellerprinzips getaktet betrieben, der durch den Gleichrichter zugeführte Strom ggf. mittels des zweiten Schalters durch wenigstens einen Wicklungsstrang gezwungen, so dass dessen Wicklung unter Ausnutzung der Induktivität desselben für den Tiefsetzsteller- Ladebetrieb aufgeladen und entladen werden kann. Über die Diode kann der Strom im Ladesystem zirkulieren. Der Wechselrichter kann den Strom hierbei über die Freilaufdioden der Leistungsschalter an die Gleichspannungsseite durchschleifen. Mittels der Taktung des ersten Schalters, d.h. über das Tastverhältnis, kann die Spannung für den Ladebetrieb eingestellt werden.

Im Rahmen der vorliegenden Erfindung ist das Ladesystem auch dazu ausgebildet, mittels wenigstens einem Wicklungsstrang, dem ersten oder dem ersten und dem zweiten Schalter sowie dem Wechselrichter, insbesondere dessen Zwischenkreiskondensator, einen Hochsetzsteller zu bilden. Hierbei ist der erste Schalter dauerhaft geschlossen, der gleichgerichtete Strom wird entlang des ersten Strompfadabschnitts durch wenigstens eine Strangwicklung gezwungen, wobei deren Wicklung mittels der Wicklungsinduktivität sowie wenigstens einem durchgeschalteten Leistungsschalter des Wechselrichters aufgeladen werden kann. Zum Entladen wird der wenigstens eine durchgeschaltete Leistungsschalter geöffnet, i.e. nicht leitend, der Ladestrom kann nunmehr über die Freilaufdioden zu einem zu ladenden Energiespeicher an der Gleichspannungsseite des Wechselrichters gelangen. Die Ladespannung kann hierbei gemäß dem Hochsetzstellerprinzip gegenüber der gleichgerichteten Spannung überhöht werden.

Das derart ausgebildete Ladesystem kann vorteilhaft kostengünstig mittels des ersten Schalters sowie wenigstens einem Wicklungsstrang im ersten Strompfadabschnitt als Hochsetzsteller oder als Tiefsetzsteller in Richtung zu einem Energiespeicher wirken.

Weitere Merkmale und Vorteile der Erfindung ergeben sich aus der nachfolgenden Beschreibung von Ausführungsbeispielen der Erfindung, anhand der Figuren der Zeichnungen, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

Beispielhafte Ausführungsformen der Erfindung werden nachfolgend anhand der beigefügten Zeichnungen näher erläutert. Es zeigen:
Fig. 1 exemplarisch ein Ladesystem mit einem ersten Schalter sowie einer im Stern verschalteten Drehfeldmaschine gemäß einer möglichen Ausführungsform der Erfindung; und
Fig. 2 exemplarisch ein Ladesystem mit einem ersten und einem zweiten Schalter sowie einer im Dreieck verschalteten Drehfeldmaschine gemäß einer weiteren möglichen Ausführungsform der Erfindung.

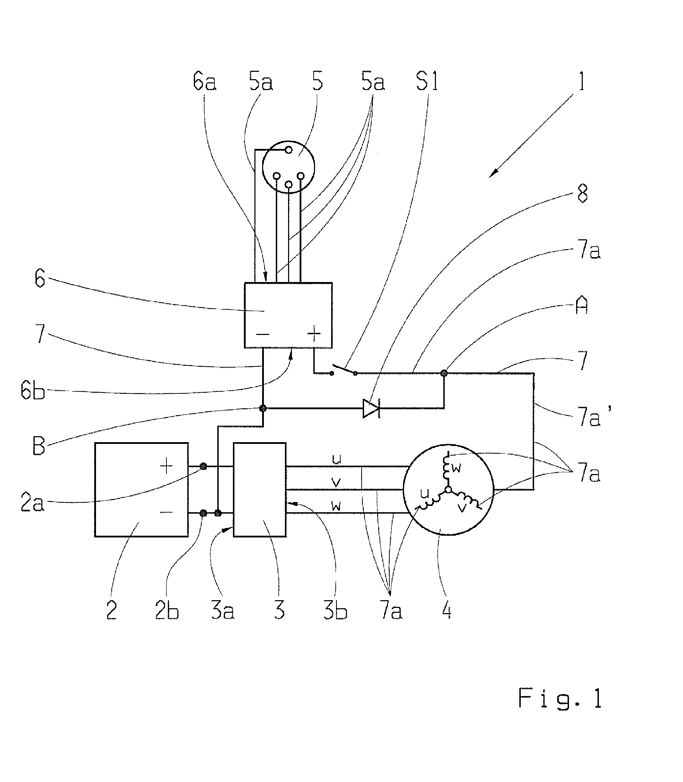

Fig. 1 zeigt ein Ladesystem 1 zum Laden eines elektrischen Energiespeichers 2, welcher an einer Gleichspannungsseite 3a eines Wechselrichters 3 des Ladesystems 1 angeordnet und mit diesem elektrisch verbunden ist. Ein Zwischenkreiskondensator des Wechselrichters 3 ist hierbei zu den Anschlussklemmen 2a, b des Energiespeichers 2 parallel geschaltet. Der Antriebswechselrichter 3 ist an seiner Wechselspannungsseite 3b über Strang leitungen u, v, w mit den Wicklungssträngen U, V, W einer in Stern geschalteten Drehfeldmaschine 4 verbunden, welche die Strangwicklungen U, V, W elektrisch mit Mittenabgriffen der Halbbrücken des Wechselrichters 3 verbinden.

Das Ladesystem 1 weist weiterhin einen Versorgungseingang 5 auf, welcher zur Verbindung mit einem externen Energieversorgungsnetz vorgesehen ist. Der Versorgungseingang 5 ist über Verbindungsleitungen 5a mit dem Eingang 6a eines Gleichrichters 6 des Ladesystems 1 zur Zufuhr von elektrischer Energie an denselben verbunden. Der Gleichrichter 6 ist dazu ausgebildet, als ein- oder dreiphasiger Gleichrichter 6 zu arbeiten und ausgangsseitig eine gleichgerichtete Spannung bzw. einen gleichgerichteten Strom zu liefern, welche am Ausgang 6b des Gleichrichters 6 bzw. über dessen Pluspol und Minuspol zur Verfügung stehen.

Wie Fig. 1 zu entnehmen ist, ist ein erster Strompfadabschnitt 7a zur Führung gleichgerichteten Stroms, i.e. mittels des Gleichrichters 6 versorgten Stroms, im Ladesystem 1 über den Pluspol des Gleichrichters 6 sowie die Drehfeldmaschine 4 zum Wechselrichter 3 gebildet, welcher den Strom zwingend über Wicklungsstränge U, V, W der Drehfeldmaschine 4 führt. Der Strompfadabschnitt 7a, welcher Bestandteil eines Strompfads 7 vom Pluspol des Gleichrichters 6 zum Minuspol des Gleichrichters 6 durch das Ladesystem 1 bzw. den daran angeschlossenen Energiespeicher 2 hindurch ist, führt hierbei über den Sternpunkt der Strangwicklungen U, V, W, wobei sich der erste Strompfadabschnitt 7a stromabwärts des Sternpunkts auf die Strangwicklungen U, V, W und die damit verbundenen Strangleitungen u, v, w verzweigt. Somit stehen für einen Ladebetrieb des Ladesystems 1 die Stranginduktivitäten, insbesondere sämtliche, in beabsichtigter Weise zur Verfügung.

Im ersten Strompfadabschnitt 7a ist in Richtung vom Gleichrichter 6 zur Drehfeldmaschine 4 vor der Drehfeldmaschine 4 bzw. stromaufwärts derselben, ein erster Schalter S1 angeordnet, mittels welchem der erste Strompfadabschnitt 7a selektiv unterbrechbar ist. Der erste Schalter S1 ist als transistorisierter, steuerbarer Leistungsschalter ausgeführt, über dessen Schaltstrecke der Strompfad 7 bzw. dessen erster Strompfadabschnitt 7a führt. Bei offen gesteuertem Schalter S1 ist der Strompfadabschnitt 7a unterbrochen, bei geschlossen gesteuertem Schalter S1 leitend.

Unter Ausnutzung der Stranginduktivitäten kann die Ladespannung für einen Ladebetrieb zum Laden des Energiespeichers 2 an der Gleichspannungsseite 3a mittels des Wechselrichters 3 gemäß des Hochsetz- oder Tiefsetzstellerprinzips geeignet eingestellt werden, so dass ein beabsichtigter Ladestrom zum Laden des Energiespeichers 2 mittels des über die Strang leitungen u, v, w an den Wechselrichter 3 zugeführten, vom Gleichrichter 6 versorgten Stroms einstellbar ist.

Ein Ladestrom kann über die mit dem Wechselrichter 3 verbundenen Anschlussklemmen 2a, 2b in den Energiespeicher 2 fließen, wobei dessen Minuspol mit dem Minuspol des Gleichrichters 6 verbunden ist, so dass sich ein geschlossener Strompfad 7 bzw. Stromkreis bei einem Ladebetrieb durch das Ladesystem 1 sowie den Energiespeicher 2 realisieren lässt. Für den Tiefsetzstellerbetrieb weist das Ladesystem 1 hierbei eine Diode 8 auf, welche über einen ersten Abgriff A im ersten Strompfadabschnitt 7a, welcher stromaufwärts der Drehfeldmaschine 4 und stromabwärts des ersten Schalters S1 angeordnet ist, einerseits mit dem Pluspol des Gleichrichters 6 in Abhängigkeit der Schalterstellung des Schalters S1 elektrisch verbindbar ist, i.e. selektiv, und über einen zweiten Abgriff B im Strompfad 7 andererseits unmittelbar mit dem Minuspol des Gleichrichters 6 elektrisch verbunden ist. Die Sperrrichtung der Diode 8 weist hierbei vom ersten Abgriff A zum zweiten Abgriff B. Über die Diode 8 kann der Strom im Tiefsetzstellerbetrieb bei geöffnetem Schalter S1 zirkulieren.

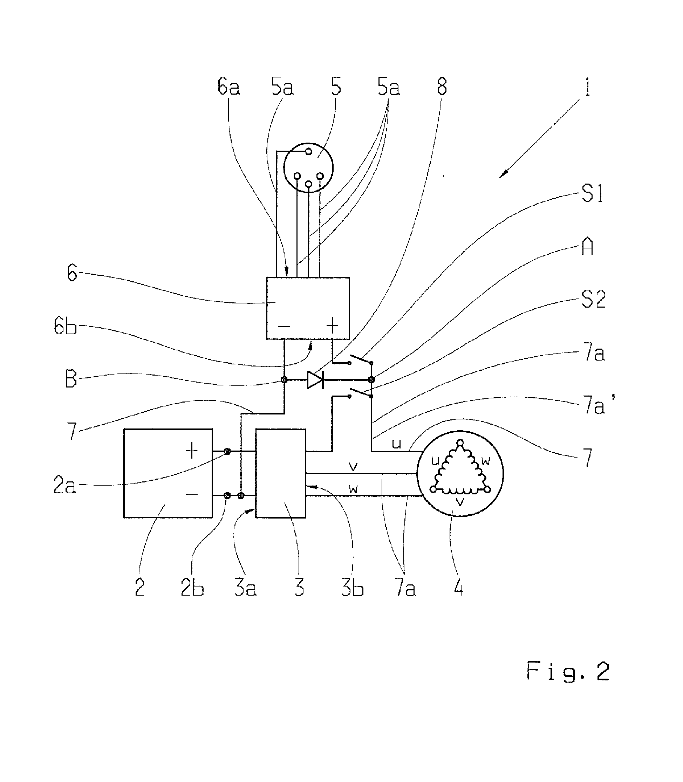

Fig. 2 zeigt eine Ausführungsform des Ladesystems 1, welches sowohl im Zusammenhang mit einer in Stern- als auch einer in Dreieckverschaltung ausgeführten Drehfeldmaschine 4 zu einem Ladebetrieb geeignet ist. Vorliegend ist die Drehfeldmaschine 4 in Dreieckverschaltung ausgeführt. Eine Einspeisung des gleichgerichteten Stromes in die Drehfeldmaschine 4 mittels des ersten Strompfadabschnitts 7a ist hierbei an einer Anschlussklemme der Drehfeldmaschine 4 vorgesehen, welche mit der Strangleitung u verbunden ist.

Weiterhin im Unterschied zur Ausführungsform gemäß Fig. 1, weist das Ladesystem 1 gemäß Fig. 2 einen zweiten Schalter S2 auf, welcher dazu vorgesehen ist, eine Führung des seitens des Gleichrichters 6 versorgten Stroms über Wicklungsstränge U, V, W der Drehfeldmaschine 4 zu erzwingen. Der zweite Schalter S2 ist hierbei dazu vorgesehen, jene Strangleitung u im Ladebetrieb selektiv zu unterbrechen, über welche der an die mit der Strangleitung u verbundene Anschlussklemme der Drehfeldmaschine 4 zugeführte Strom zum Wechselrichter 3 die Drehfeldmaschinenwicklungen U, V, W ansonsten umgehen könnte.

Die Schaltstrecke des zweiten Schalters S2 liegt hierbei in der Strangleitung u, so dass diese Strangleitung u bei offen gesteuertem Schalter S2 unterbrochen, bei geschlossen gesteuertem Schalter S2 leitend ist. Anders ausgedrückt ist der Schalter S2 in der Strangleitung u angeordnet. Die Strangleitung u ist hierbei, wie vorstehend bereits angedeutet, mit dem Einspeisepunkt an der Drehfeldmaschine 4 elektrisch leitend verbunden, zweigt insofern von einem ersten Teil 7a' des ersten Strompfadabschnitts 7a stromabwärts des Schalters S1 ab, welcher vom Gleichrichter 6 zum Einspeisepunkt an der Drehfeldmaschine 4 führt.

Mittels dieser mit geringem Aufwand zu realisierenden Ladesystem-Anordnung, welche ansonsten gemäß vorstehend beschriebener Ausführungsform gemäß Fig. 1 entspricht, kann das Ladesystem 1, welches mittels einer in Stern- oder Dreieckschaltung ausgeführten Drehfeldmaschine 4 gebildet werden kann, wie vorstehend beschrieben in einem Hochsetzsteller- oder Tiefsetzsteller-Ladebetrieb betrieben werden.

### Bezugszeichen

- 1: Ladesystem
- 2: Energiespeicher
- 2a, b: Anschlussklemmen 2
- 3: Antriebswechselrichter
- 3a: Gleichspannungsseite 3
- 3b: Wechselspannungsseite 3
- 4: Drehfeldmaschine
- 5: Versorgungsanschluss
- 5a: Verbindungsleitungen
- 6: Gleichrichter
- 6a: Eingang 6
- 6b: Ausgang 6
- 7: Strompfad
- 7a: erster Strompfadabschnitt
- 7a': erster Teil 7a
- 8: Diode
- u, v, w: Strangleitungen
- U, V, W: Wicklungsstränge
- A, B: Abgriff
- S1: erster Schalter
- S2: zweiter Schalter

## Patentansprüche

1. Elektrisches Ladesystem (1) für ein Kraftfahrzeug, wobei das Ladesystem (1) einen Gleichrichter (6) aufweist, welchem Energie aus einem externen Versorgungsnetz an einen Eingang (6a) zuführbar ist, wobei das Ladesystem (1) weiterhin einen Wechselrichter (3) aufweist, dessen Wechselspannungsseite (3b) über Strangleitungen (u, v, w) mit Wicklungssträngen (U, V, W) einer Drehfeldmaschine (4) elektrisch verbunden ist, und dessen Gleichspannungsseite (3a) mit einem zu ladenden Energiespeicher (2) elektrisch verbindbar ist, wobei ein erster Strompfadabschnitt (7a) zur Führung vom Gleichrichter (6) versorgten Stroms im Ladesystem (1) über den Pluspol des Gleichrichters (6) sowie die Drehfeldmaschine (4) zum Wechselrichter (3) gebildet ist, wobei der erste Strompfadabschnitt (7a) den Strom zwingend über Wicklungsstränge (U, V, W) der Drehfeldmaschine (4) führt, **dadurch gekennzeichnet, dass** der erste Strompfadabschnitt (7a) einen ersten Schalter (S1) aufweist, insbesondere einen steuerbaren Schalter (S1), mittels welchem der erste Strompfadabschnitt (7a) selektiv unterbrechbar ist, wobei das Ladesystem (1) dazu ausgebildet ist, mittels des ersten Schalters (S1) sowie wenigstens einem Wicklungsstrang (U, V, W) im ersten Strompfadabschnitt (7a) als Hochsetzsteller und auch als Tiefsetzsteller in Richtung zu einem Energiespeicher (2) wirken zu können.

2. Ladesystem (1) nach Anspruch 1, **dadurch gekennzeichnet, dass** der erste Strompfadabschnitt (7a) in Richtung vom Gleichrichter (6) zur Drehfeldmaschine (4) vor der Drehfeldmaschine (4) mittels des ersten Schalters (S1) selektiv unterbrechbar ist.

3. Ladesystem (1) nach einem der vorhergehenden Ansprüche, **dadurch gekennzeichnet, dass** ein erster Teil (7a') des ersten Strompfadabschnitts (7a) über den ersten Schalter (S1) an einen Sternpunkt einer in Stern geschalteten Drehfeldmaschine (4) geführt ist.

4. Ladesystem (1) nach einem der Ansprüche 1 und 2, **dadurch gekennzeichnet, dass** ein erster Teil (7a') des ersten Strompfadabschnitts (7a) des Ladesystems (1) über den ersten Schalter (S1) zur Drehfeldmaschine (4) geführt ist, wobei ein zweiter Schalter (S2) in einer Strangleitung (u) von der Drehfeldmaschine (4) zum Wechselrichter (3) angeordnet ist, welcher dazu vorgesehen ist, diese Strangleitung (u) selektiv zu unterbrechen, um den Strom entlang des ersten Strompfadabschnitts (7a) durch Strangwicklungen (U, V, W) der Drehfeldmaschine (3) zum Wechselrichter zu zwingen.

5. Ladesystem (1) nach Anspruch 4, **dadurch gekennzeichnet, dass** ein zweiter Teil des ersten Strompfadabschnitts (7a) durch wenigstens einen Wicklungsstrang (U, V, W) der Drehfeldmaschine (4) sowie wenigstens eine Strangleitung (v, w), insbesondere zwei Strangleitungen (v, w), zum Wechselrichter (3) führt.

6. Ladesystem (1) nach einem der vorhergehenden Ansprüche, **dadurch gekennzeichnet, dass** das Ladesystem (1) eine Diode (8) aufweist, welche in Richtung vom Gleichrichter (6) zur Drehfeldmaschine (4) stromaufwärts der Drehfeldmaschine (4) über den ersten Schalter (S1) mit dem Pluspol des Gleichrichters (6) und andererseits mit dem Minuspol des Gleichrichters (6) elektrisch verbunden ist, wobei die Sperrrichtung der Diode (8) vom Pluspol zum Minuspol des Gleichrichters (6) weist.

7. Ladesystem (1) nach einem der vorhergehenden Ansprüche, **dadurch gekennzeichnet, dass** das Ladesystem (1) dazu ausgebildet ist, mittels des ersten (S1) oder des ersten (S1) und des zweiten (S2) Schalters, der Diode (8), sowie wenigstens einem Wicklungsstrang (U, V, W) und dem Wechselrichter (3) einen Tiefsetzsteller zu bilden.

8. Ladesystem (1) nach einem der vorhergehenden Ansprüche, **dadurch gekennzeichnet, dass** das Ladesystem (1) dazu ausgebildet ist, mittels wenigstens einem Wicklungsstrang (U, V, W), dem ersten (S1) oder dem ersten (S1) und dem zweiten (S2) Schalter sowie dem Wechselrichter (3) einen Hochsetzsteller zu bilden.

9. Ladesystem (1) nach einem der vorhergehenden Ansprüche, **dadurch gekennzeichnet, dass** das Ladesystem (1) einen Versorgungseingang (5) aufweist, mittels welchem Energie aus einem externen Versorgungsnetz an den Gleichrichter (6) versorgbar ist.

10. Ladesystem (1) nach einem der vorhergehenden Ansprüche, **dadurch gekennzeichnet, dass** der Gleichrichter (6) dazu ausgebildet ist, als einphasiger oder dreiphasiger Gleichrichter (6) zu wirken.

11. Ladesystem (1) nach Anspruch 9 und 10, **dadurch gekennzeichnet, dass** der Versorgungseingang (5) zwischen Drehstrom und Wechselstrom umschaltbar ist.

12. Ladesystem (1) nach einem der vorhergehenden Ansprüche, **dadurch gekennzeichnet, dass** der erste Schalter (S1) Bestandteil des Gleichrichters (6) ist.

13. Kraftfahrzeug, **gekennzeichnet durch** ein Ladesystem (1) nach einem der vorhergehenden Ansprüche.
